# EUROPÄISCHE PATENTSCHRIFT

(11) **EP 1 529 331 B1**
(45) Veröffentlichungstag und Bekanntmachung des Hinweises auf die Patenterteilung: **25.11.2009**
(21) Anmeldenummer: 03740480.3
(22) Anmeldetag: 28.07.2003
(51) Int. Cl.: H02K 3/40

(54) **VERFAHREN ZUM BEHEBEN VON DEFEKTEN AN ELEKTRISCH LEITFÄHIGEN BESCHICHTUNGEN ZUR POTENTIALSTEUERUNG**
METHOD FOR REMOVING DEFECTS FROM ELECTRICALLY CONDUCTIVE COATINGS FOR CONTROLLING POTENTIAL
PROCEDE POUR REMEDIER AUX IMPERFECTIONS DE REVETEMENTS ELECTROCONDUCTEURS DE PROTECTION ANTI-EFFLUVES

(30) Priorität: 13.08.2002 AT 12242002
(43) Veröffentlichungstag der Anmeldung: 11.05.2005
(73) Patentinhaber: Andritz Hydro GmbH, 1141 Wien (AT)
(72) Erfinder: MUSSBACHER, Günther, A-8062 Kumberg (AT); MÜLLER, Franz, A-8071 Grambach (AT)
(74) Vertreter: Schweinzer, Friedrich
(86) Internationale Anmeldenummer: PCT/EP2003/008301
(87) Internationale Veröffentlichungsnummer: WO 2004/023627

(56) Entgegenhaltungen:
- AT-B- 386 705
- DE-U- 29 712 347
- US-A- 3 824 683
- US-A- 5 969 456

## Beschreibung

Die gegenständliche Erfindung betrifft ein Verfahren zum Beheben von Defekten an elektrisch leitfähigen Beschichtungen zur Potentialsteuerung von in einer Halterung angeordneten Hochspannungswicklungen für elektrische Maschinen, wobei zumindest ein mit einer Hauptisolierung umgebener Leiter mit einer Beschichtung zur Potentialsteuerung versehen ist, indem zumindest die außerhalb des Nutbereichs der Halterung, im Bereich zwischen Nutausgang und Übergang zum Wicklungskopf befindliche fehlerhafte Oberfläche im Bereich der defekten Beschichtung mit einem elektrisch leitfähigen Belag beschichtet wird.

Ein solches Verfahren ermöglicht es, defekte Beschichtungen zur Potentialsteuerung bei Hochspannungswicklungen von elektrischen Maschinen in ihrer Funktion soweit wieder herzustellen, dass ein Betrieb der Maschine ohne nennenswerten Gleitentladungen möglich ist.

Hochspannungsisolierungen für Hochspannungswicklungen von elektrischen Maschinen, insbesondere rotierenden elektrischen Maschinen, besitzen zur Vermeidung von Oberflächengleitentladungen in- und außerhalb der Halterung (z.B. einem Stator- oder Blechpaket), also im Nut- und Nutausgangsbereich, eine niederohmige, spannungsunabhängige Beschichtung (= Potentialsteuerung oder Außenglimmschutz) und anschließend im Übergangsbereich zum Wickelkopf eine meist spannungsabhängige elektrisch leitende oder halbleitende Beschichtung (= Endenpotentialsteuerung oder Endenglimmschutz).

Durch die Potentialsteuerung wird sichergestellt, dass das Oberflächenpotential des Leiters, also etwa des Wicklungsstabes oder der Spule, im Nut- und Nutausgangsbereich der Halterung (z.B. des Statorpaketes) auf Massepotential liegt und keine Entladungen zwischen Wicklungsoberfläche und Halterung (Statorpaket) oder anderen Konstruktionsteilen auftreten können. Im Wickelkopfbereich wird dann zumeist durch Endenpotentialsteuerbeläge das Oberflächenpotential vom Wicklungsstab oder von der Spule mehr oder weniger linear auf das Hochspannungspotential hochgesteuert. Die elektrische Leitfähigkeit dieser Endenpotentialsteuerung ist so zu bemessen, dass keine nennenswerten Gleitentladungen auf der Wicklungsoberfläche auftreten können.

Durch thermomechanische und dielektrische Einflüsse, aber auch durch Vibrationen, kann es nun im Laufe der Betriebszeit zu Beeinträchtigungen dieser Beschichtungen, vor allem im Nutausgangsbereich, kommen. In vielen Fällen sind vorstehende Bleche, bedingt durch Verschichtungen, oder Blechkanten für mechanische Verletzungen, wie Abschürfungen oder Abrieb, der Beschichtung verantwortlich.

Durch fehlende Beschichtungen kann es auf der Wicklungsoberfläche zu undefinierten Potentialverteilungen und in der Folge zu Gleitentladungen kommen. Treten diese Verletzungen der Beschichtungen am Nutausgang auf und weiten sich rund um den Leiter, also den Stab oder die Spule, auf, so ist die Ableitung der kapazitiven Ströme vom Wickelkopf unterbrochen und es können, je nach Ausbildung der Unterbrechung, beträchtliche Oberflächengleitentladungen, die zur Beeinträchtigung der Isolationsoberfläche und zu einer starken Ausweitung von den Fehlstellen führen, auftreten.

Aus der US 3 824 683 A geht ein Verfahren zur Reduzierung der Glimmentladungen in einer dynamoelektrischen Maschine hervor. Dazu muss die elektrische Maschine in eine vertikale Stellung gebracht werden, in der anschließend durch entsprechende Düsen durch die Lüftungsschlitze ein leitfähiger Lack zwischen den Nuten und den Leitern eingebracht wird. Dies ist ein sehr aufwendiger Vorgang, da die Düse in jedem der Lüftungsschlitze positioniert werden muss, um zwischen jeder Nut und jedem Leiter den Lack einbringen zu können. Weiters wird in ausgewählten Lüftungsschlitzen ein elektrisch leitfähiges Elastomer eingebracht, um lokal eine elektrische Verbindung zwischen den Leitern und dem Blechpaket herzustellen. Diese Verfahren betrifft jedoch nur die Reduzierung von Glimmentladungen im Nutbereich, also zwischen den beiden gegenüberliegenden Nutausgängen und nicht den Bereich zwischen Nutausgang und Übergang zum Wicklungskopf.

Stand der Technik ist es, fehlende Beschichtungen in Form von entsprechend elektrisch leitenden Anstrichen oder durch Umwickeln mit einem leitfähigen, bandförmigen Material aus anorganischem Karbon (siehe JP 2002-223550 A (Toshiba)) auszubessern. Damit wird zwar der ursprüngliche Zustand wieder hergestellt, jedoch keine Verbesserung hinsichtlich der Funktion erreicht. Mit einem neuerlichem Auftreten ist, da die Ursache in den meisten Fällen nicht beseitigt werden kann, wieder zu rechnen.

Eine Aufgabe der vorliegenden Erfindung besteht nun darin, ein Verfahren bzw. eine Anordnung zur Verfügung zu stellen, welche ein neuerliches Auftreten von Fehlstellen außerhalb der Halterung der Hochspannungswicklung, also etwa am Nutausgang, zu vermeiden helfen.

Die Aufgabe wird durch das Verfahren gemäß Anspruch 1 bzw. eine entsprechende elektrische Maschine gemäß Anspruch 8 gelöst.

Mit dieser Erfindung wird es erstmals möglich, die Funktion von im Laufe der Betriebszeit durch mechanische oder elektrische Einwirkungen beschädigten Beschichtungen zur Potentialsteuerung soweit wieder herzustellen, dass vor allem die Ableitung der kapazitiven Ströme von den Wicklungsenden bzw. Wickelköpfen sichergestellt ist. Damit werden jene Oberflächengleitentladungen vermieden, die sonst wesentlich den Teilentladungspegel beeinflussen bzw. überdecken und eine genauere dielektrische Überwachung und damit Zustandsbeurteilung undurchführbar machen. Das Verfahren kann unabhängig vom bestehenden Wicklungsbefestigungssystem und der damit verbundenen Kontaktierungsart zur Halterung (z.B. dem Stator- oder Blechpaket) angewandt werden.

Bei diesem Verfahren wird der Bereich der ursprünglichen Beschichtung außerhalb der Halterung erneuert. Beispielsweise wird der außerhalb der Nut liegende beschädigte Bereich der Beschichtung zur Potentialsteuerung des Wicklungsstabes oder der Spule wieder mit einem leitenden Belag versehen, der dann direkt mit dem Blechpaket - und sofern eine Endenpotentialsteuerung vorhanden ist, auch mit dieser - elektrisch leitend verbunden wird.

Besonders vorteilhaft beim erfindungsgemäßen Verfahren ist, wenn die Verbindung mit der Halterung (z.B. dem Blechpaket) elastisch ausgeführt wird, um insbesondere auch bei betriebsbedingten thermomechanischen Stabbewegungen eine sichere und vom Wicklungsbefestigungssystem unabhängige elektrische Verbindung zu gewährleisten. Hierzu eignen sich besonders elektrisch leitfähige Elastomere, wie ein bei Raumtemperatur vernetzendes elektrisch leitfähiges Silikon, welches sehr gut vor Ort verarbeitet werden kann. Auf einfache Art kann dies durch Ausfüllen eines bestehenden Raumes, wie eines Spaltes, zwischen dem Leiter und einem geerdeten Bauteil der elektrischen Maschine im Bereich des Belages erfolgen.

Wenn die elektrisch leitfähige Verbindung im Bereich des Nutausgangs angeordnet wird, können etwaige in diesem Bereich neu auftretende Isolationsströme gut abgeleitet werden.

Grundsätzlich wird die axiale Erstreckung des Leitbelages an der Wicklungsoberfläche vom Ausgang des Leiters aus der Halterung (Nutausgang) so bemessen, dass diese sich mindestens soweit in den Wickelkopfbereich sich erstreckt, dass am Ende die erforderlichen Spannungabstände zur Vermeidung von Entladungen zu geerdeten Maschinenkomponenten eingehalten werden.

Wenn die Hochspannungswicklung mit einer Endenpotentialsteuerung ausgestattet ist, sollte sich der Belag von der Halterung der Hochspannungswicklung bis zum Beginn der Endenpotentialsteuerung erstrecken und mit dieser elektrisch leitfähig verbunden werden.

Auf eine Reduzierung von Oberflächenentladungen innerhalb der Halterung, also im Nutbereich, die auf Grund der gegebenen geometrischen und dielektrischen Verhältnisse in der Regel nur einen geringen Pegel aufweisen, kann beim erfindungsgemäßen Verfahren verzichtet werden. Untersuchungen zeigten, dass diese Entladungen auf die zumeist verwendeten Glimmerisolierungen kaum einen lebensdauervermindernden Einfluss besitzen und die Verfügbarkeit der Maschine praktisch nicht beeinflussen. Damit kann auf den sehr aufwändigen Wicklungsausbau zur Sanierung der Potentialsteuerbeschichtungen verzichtet werden.

Das vorgeschlagene Verfahren stellt ein kostengünstiges und wirtschaftliches Verfahren zur Reduktion von Oberflächenentladungen dar. Ein weiterer positiver Effekt dieses Verfahrens ist eine wesentliche Minderung der durch Oberflächenentladungen verursachte Ozonbildung im Kühlkreislauf der elektrischen Maschine.

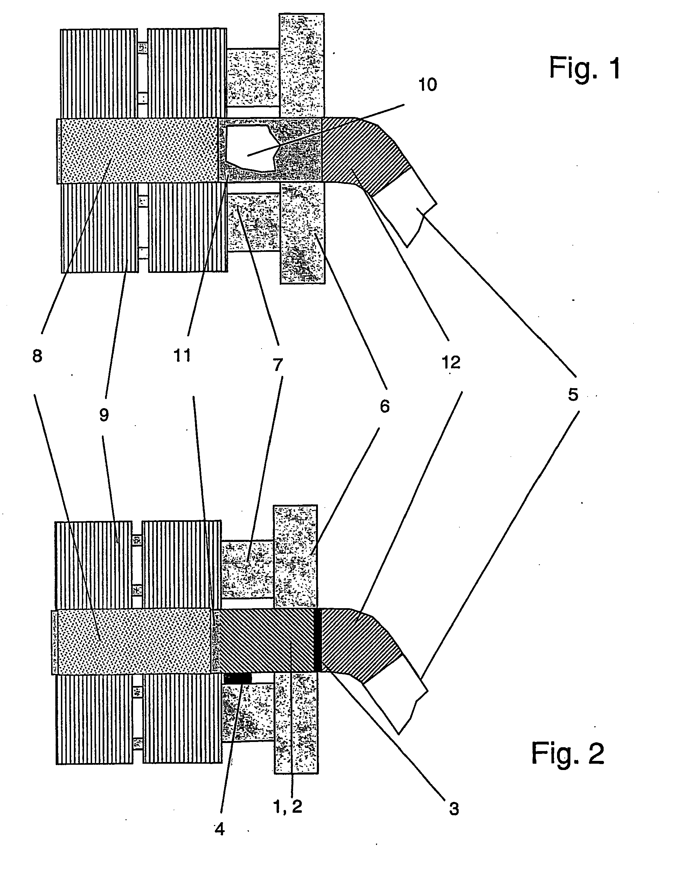

Die Erfindung wird anschließend anhand der Fig. 1 und 2 beispielhaft erläutert:
- Fig. 1: zeigt eine Hochspannungswicklung mit defekter Potentialsteuerungsbeschichtung.
- Fig. 2: zeigt die selbe Hochspannungswicklung wie Fig. 1 mit behobenem Defekt.

In Fig. 1 ist ein Wicklungsstab 5 dargestellt, welcher in einem Blechpaket 9 mittels einer Wicklungsbefestigung 8 gehalten wird. Der Wicklungsstab 5 ist mit einer Beschichtung 11 zur Potentialsteuerung vollflächig umgeben, welche sich in diesem Fall axial über die Zahnfinger 7 hinaus etwa bis zum dem Blechpaket 9 abgewandten Ende der Pressplatte 6 erstreckt. Dort schließt sich die Endenpotentialsteuerung 12 an. Die Beschichtung 11 weist eine Fehlstelle 10 auf.

Erfindungsgemäß wird zumindest der Bereich der Fehlstelle 10 selbst neu beschichtet, vorzugsweise wird jedoch der gesamte Bereich der ursprünglichen Beschichtung 11 außerhalb des Blechpaktes 9 erneuert.

Die Fehlstelle 10 wird gemäß Fig. 2 so bearbeitet, dass der betroffene Wicklungsstab 5 (bzw. die Spule) vom Nutausgang (Ende des Blechpaketes 9) bis zur Endenpotentialsteuerung 12 so lange wie die ursprüngliche Beschichtung mit einem gut benetzenden und in Oberflächenporen eindringenden elektrisch leitfähigen Lack 1, ähnlich einem Haftschichtvermittler, als Grundbeschichtung beschichtet wird. Ein vollständiges Entfernen der ursprünglichen Beschichtung oder von isolierenden Überzugslacken ist nicht erforderlich. Es muss nur eine ausreichende und einwandfreie Kontaktierung 3 am Ende der ursprünglichen Beschichtung 11 mit der spannungsgesteuerten Endenpotentialsteuerung 12 (soferne eine solche vorhanden ist) sichergestellt werden.

Zur Verbesserung der mechanischen Eigenschaften, wird auf den ersten Anstrich (die Grundbeschichtung) ein weiterer elektrisch leitender Anstrich 2 (Deckbeschichtung) mit erhöhter Abriebfestigkeit aufgebracht. Damit wird einerseits die für die Ableitströme erforderliche Beschichtungsstärke geschaffen, andererseits eine mechanisch abriebfeste (resistente) Oberflächenqualität sichergestellt.

Als Grundschicht kommen beispielsweise leitfähige Lacke auf Kunstharzbasis mit leitfähigen Pigmenten, etwa Graphitpigmenten, zur Anwendung, die so dünnflüssig angesetzt werden, dass eine entsprechende Benetzung erzielt wird.

Als Deckschicht können ebenfalls leitfähige Lacke auf Kunstharzbasis mit leitfähigen Pigmenten, etwa Graphitpigmenten, verwendet werden, jedoch sind diese dann dickflüssiger als jene für die Grundschicht, um eine größere Schichtstärke zu erhalten.

Grundsätzlich kann aber die Funktion des Belags durch eine einzige Schicht sichergestellt werden.

Um eine sichere Ableitung der kapazitiven Ableitströme auch bei großen thermomechanischen Bewegungen des Wicklungsstabes 5 gegenüber dem Blechpaket 9 zu gewährleisten und andererseits nicht auf die Kontaktierungsverhältnisse durch das bestehende Wicklungsbefestigungssystem 8 angewiesen zu sein, ist eine elastische Erdung 4 des neuen Leitanstriches 1, 2 vorzusehen.

Hier wird eine elastische Verbindung des zweiten Anstrichs 2 (Deckbeschichtung) mit Hilfe eines elektrisch leitenden und dauerelastischen Polymers (Elastomeres) vorgesehen. Dabei genügt es, den neuen Außenglimmschutzbelag punktuell mit dem Blechpaket 9 zu erden, es kann dies aber auch abschnittsweise oder am gesamten Stab- oder Spulenumfang erfolgen und zwar vorzugsweise im Bereich des Nutausganges. Diese Erdung kann auch an anderen konstruktiven Maschinenkomponenten, wie am Zahnfinger 7, der Pressplatte 6 oder anderen Blechpaketpresseinrichtungen, erfolgen.

Eine besondere Ausgestaltung der Erfindung ist das Ausspritzen des fertigungstechnisch bedingten Spaltes zwischen Wicklungsoberfläche des Wicklungsstabes 5 am Nutausgang und einer der Blechpaketpresseinrichtungen, wie etwa dem in Fig. 2 dargestellten Zahnfinger 7, mit einer elektrisch leitfähigen Silikonmasse.

Durch eine Erdung im Bereich des Nutausgangs, wie durch die dargestellte Erdung 4, ist die Ableitung der kapazitiven Isolationsströme, auch wenn es unmittelbar am Nutausgang zu einer neuerlichen Beeinträchtigung der Potentialsteuerbeschichtung kommen sollte, sichergestellt. Weiters werden die großen Gleitentladungen am Nutausgang und damit ein neuerliches Ausweitung der Fehlstelle 10 mit den vorhin geschilderten Folgen sicher vermieden.

Die Erfindung wird vorzugsweise zur Behebung von oberflächigen Erosionen oder Fehlstellen an außerhalb des Blechpakets angeordneten Potentialsteuerbeschichtungen bei Wicklungsstäben oder Spulen von Hochspannungswicklungen für rotierende elektrische Maschinen angewendet. Die Erfindung ist jedoch auch für andere elektrische Apparate, wie für Transformatoren, einsetzbar.

## Patentansprüche

1. Verfahren zum Beheben von Defekten an elektrisch leitfähigen Beschichtungen (11) zur Potentialsteuerung von in Nuten einer Halterung (9) angeordneten Hochspannungswicklungen für elektrische Maschinen, wobei zumindest ein mit einer Hauptisolierung umgebener Leiter (5) mit einer Beschichtung (11) zur Potentialsteuerung versehen ist, indem die fehlerhafte Oberfläche (10) im Bereich der defekten Beschichtung (11) mit einem elektrisch leitfähigen Belag (1, 2) beschichtet wird und dass der Belag (1, 2) mittels einer zusätzlichen elektrisch leitfähigen Verbindung (4) auf gleiches Potential mit der Halterung (9) gebracht wird, **dadurch gekennzeichnet, dass** sich die fehlerhafte Oberfläche außerhalb des Nutbereichs der Halterung im Bereich zwischen Nutausgang und Übergang zum Wickelkopf befindet und dass der Belag (1, 2) mehrschichtig ausgeführt wird, wobei auf einer als Haftvermittler dienenden Grundbeschichtung (1) eine abriebfeste Deckbeschichtung (2) aufgetragen wird.

2. Verfahren nach Anspruch 1, **dadurch gekennzeichnet, dass** die elektrisch leitfähige Verbindung (4) elastisch ausgeführt wird.

3. Verfahren nach Anspruch 2, **dadurch gekennzeichnet, dass** die Verbindung (4) mit einem elektrisch leitfähigen Elastomere hergestellt wird.

4. Verfahren nach Anspruch 3, **dadurch gekennzeichnet, dass** als elektrisch leitfähiges Elastomere ein bei Raumtemperatur vernetzendes elektrisch leitfähiges Silikon verwendet wird.

5. Verfahren nach einem der Ansprüche 3 oder 4, **dadurch gekennzeichnet, dass** der Raum zwischen dem Leiter (5) und einem Bauteil (7) der elektrischen Maschine im Bereich des Belages (1, 2) zumindest teilweise mit einem Elastomere ausgefüllt wird.

6. Verfahren nach einem der Ansprüche 1 bis 5, **dadurch gekennzeichnet, dass** die elektrisch leitfähige Verbindung (4) im Bereich des Nutausgangs angeordnet wird.

7. Verfahren nach einem der Ansprüche 1 bis 6 für eine mit einer Endenpotentialsteuerung (12) ausgestatteten Hochspannungswicklung, **dadurch gekennzeichnet, dass** sich der Belag (1, 2) von der Halterung (9) der Hochspannungswicklung bis zum Beginn der Endenpotentialsteuerung (12) erstreckt und mit dieser elektrisch leitfähig verbunden wird.

8. Elektrische Maschine, welche zumindest einen mit einer Hauptisolierung umgebenen Leiter (5) einer in einer Nut einer Halterung (9) angeordneten Hochspannungswicklung mit einer Beschichtung (11) zur Potentialsteuerung aufweist, wobei eine defekte Oberfläche (10) im Bereich der ursprünglichen Beschichtung (11) mit einem elektrisch leitfähigen Belag (1, 2) beschichtet ist und dass der Belag (1, 2) mittels einer zusätzlichen elektrisch leitfähigen Verbindung (4) mit einem Bauteil (7) der elektrischen Maschine verbunden ist, **dadurch gekennzeichnet, dass** sich die defekte Oberfläche außerhalb des Nutbereichs der Halterung im Bereich zwischen Nutausgang und Übergang zum Wickelkopf befindet und dass der Belag (1, 2) mehrschichtig ausgeführt wird, wobei auf einer als Haftvermittler dienenden Grundbeschichtung (1) eine abriebfeste Deckbeschichtung (2) aufgetragen wird.

9. Elektrische Maschine nach Anspruch 8, **dadurch gekennzeichnet, dass** die elektrisch leitfähige Verbindung (4) elastisch ausgeführt ist.

10. Elektrische Maschine nach Anspruch 9, **dadurch gekennzeichnet, dass** die Verbindung (4) aus einem elektrisch leitfähigen Elastomere besteht.

11. Elektrische Maschine nach Anspruch 10, **dadurch gekennzeichnet, dass** das elektrisch leitfähige Elastomere ein bei Raumtemperatur vernetzendes elektrisch leitfähiges Silikon ist.

12. Elektrische Maschine nach einem der Ansprüche 10 oder 11, **dadurch gekennzeichnet, dass** der Raum zwischen dem Leiter (5) und einem Bauteil (7) der elektrischen Maschine im Bereich des Belages (1, 2) mit einem Elastomere zumindest teilweise ausgefüllt ist.

13. Elektrische Maschine nach einem der Ansprüche 8 bis 12, **dadurch gekennzeichnet, dass** die elektrisch leitfähige Verbindung (4) im Bereich des Nutausgangs angeordnet ist.

14. Elektrische Maschine nach einem der Ansprüche 8 bis 13, die eine mit einer Endenpotentialsteuerung (12) ausgestattete Hochspannungswicklung aufweist, **dadurch gekennzeichnet, dass** sich der Belag (1, 2) von der Halterung (9) der Hochspannungswicklung bis zum Beginn der Endenpotentialsteuerung (12) erstreckt und mit dieser über eine Kontaktierung (3) elektrisch leitfähig verbunden ist.

## Claims

1. Method for remedying defects of electrically conductive coatings (11) for potential grading of high-voltage windings for electric machines, which windings are placed in the grooves of a holding device (9), where at least one conductor (5), surrounded by a main insulation, is provided with a coating (11) for grading the potential, by coating the defective surface (10) with an electrically conductive coat (1, 2) in the area of the defective coating (11), with the coat (1, 2) being raised to the same potential as the holding device (9) by means of an additional electrically conductive connection (4) **characterized by** the defective surface (10) being located outside the groove area of the holding device (9) between the end of the grooves and the transition to the winding head and by the coat (1, 2) being applied in several layers, with an abrasion-resistant final coat (2) being applied on a base coat (1) which serves as bonding agent.

2. Method according to Claim 1, **characterized by** the electrically conductive connection (4) being elastic.

3. Method according to Claim 2, **characterized by** the connection (4) being made of an electrically conductive elastomere.

4. Method according to Claim 3, **characterized by** an electrically conductive silicone being used as electrically conductive elastomere that links up at ambient temperature.

5. Method according to one of the Claims 3 or 4, **characterized by** the area between the conductor (5) and a component (7) of the electric machine in the area of the coat (1, 2) being filled with an elastomere at least partially.

6. Method according to one of the Claims 1 to 5, **characterized by** the electrically conductive connection (4) being arranged in the area of the end of the grooves.

7. Method according to one of the Claims 1 to 6 for a high-voltage winding that is equipped with a end potential grading (12), **characterized by** the coat (1, 2) extending from the holding device (9) of the high-voltage winding to the beginning of the end potential grading (12) and by being connected electrically conductively to the end potential grading (12).

8. Electric machine having at least one conductor (5), surrounded by main insulation, of a high-voltage winding placed in the groove of a holding device (9) with a coating (11) for grading the potential, where a defective surface (10) is coated with an electrically conductive coat (1, 2) in the area of the initial coating (11), the coat (1, 2) being connected to a component (7) of the electric machine by means of an additional electrically conductive connection (4), **characterized by** the defective surface (10) being located outside the groove area of the holding device (9), between the end of the grooves and the transition to the winding head and by the coat (1, 2) being applied in several layers, with an abrasion-resistant final coat (2) being applied on a base coat (1) which serves as bonding agent.

9. Electric machine according to Claim 8, **characterized by** the electrically conductive connection (4) being elastic.

10. Electric machine according to Claim 9, **characterized by** the connection (4) being made of an electrically conductive elastomere.

11. Electric machine according to Claim 10, **characterized by** the electrically conductive elastomere being an electrically conductive silicone that links up at ambient temperature.

12. Electric machine according to one of the Claims 10 or 11, **characterized by** the area between the conductor (5) and a component (7) of the electric machine in the area of the coat (1, 2) being filled with an elastomere at least partially.

13. Electric machine according to one of the Claims 8 to 12, **characterized by** the electrically conductive connection (4) being arranged in the area of the end of the grooves.

14. Electric machine according to one of the Claims 8 to 13, having a high-voltage winding that is equipped with a end potential grading (12), **characterized by** the coat (1, 2) extending from the holding device (9) of the high-voltage winding to the beginning of the end potential grading (12) and by being connected electrically conductively to the end potential grading (12) with a contacting (3).

## Revendications

1. Méthode de réparation de défauts de revêtement électriquement conducteur (11) pour dispositifs anti-effluves d'enroulements haute tension pour machines électriques, ces enroulements étant placés dans des rainures d'une fixation (9), où au moins un conducteur (5), entouré par une isolation principale est pourvu d'un revêtement (11) pour dispositif anti-effluves, en recouvrant la surface (10) défective d'un revêtement électriquement conducteur (1, 2) dans la zone du revêtement défectif (11), le revêtement (1, 2) étant relevé au même potentiel que la fixation (9) moyennant une autre connexion électriquement conductrice (4), **caractérisée en ce que** la surface défective (10) se trouve en dehors de la zone rainurée de la fixation (9) entre l'extrémité des rainures et la zone de transition à la connexion frontale, et **en ce que** le revêtement (1, 2) est appliqué en plusieurs couches, un revêtement de finition résistant à l'abrasion (2) étant appliqué sur une couche de base (1) servant en tant qu'agent adhésif.

2. Méthode selon la revendication 1, **caractérisée en ce que** la connexion électriquement conductrice (4) est élastique.

3. Méthode selon la revendication 2, **caractérisée en ce que** la connexion (4) est faite avec un élastomère électriquement conducteur.

4. Méthode selon la revendication 3, **caractérisée en ce qu'**une silicone électriquement conductrice est utilisée en tant qu'élastomère électriquement conducteur, qui réticule à température ambiante.

5. Méthode selon l'une des revendications 3 ou 4, **caractérisée en ce que** la zone entre le conducteur (5) et un composant (7) de la machine électrique dans la zone du revêtement (1, 2) est remplie d'un élastomère au moins partiellement.

6. Méthode selon l'une des revendications 1 à 5, **caractérisée en ce que** la connexion électriquement conductrice (4) est disposée dans la zone d'extrémité des rainures.

7. Méthode selon l'une des revendications 1 à 6 pour un enroulement haute tension équipé d'un dispositif anti-effluves aux extrémités (12), **caractérisée en ce que** le revêtement (1, 2) s'étend de la fixation (9) de l'enroulement haute tension au commencement du dispositif anti-effluves aux extrémités (12) et est lié au dispositif anti-effluves aux extrémités (12) de façon électriquement conductrice.

8. Machine électrique ayant au moins un conducteur (5), entouré par une isolation principale d'un enroulement haute tension placé dans les rainures d'une fixation (9) pourvu d'un revêtement (11) de dispositif anti-effluves, où une surface (10) défective est revêtue d'un revêtement électriquement conducteur (1, 2) dans la zone de revêtement original (11), le revêtement (1, 2) étant connecté à un composant (7) d'une machine électrique moyennant une autre connexion électriquement conductrice (4), **caractérisée en ce que** la surface défective (10) se trouve en dehors de la zone rainurée de la fixation (9) entre l'extrémité des rainures et la zone de transition à la connexion frontale, et **en ce que** le revêtement (1, 2) est appliqué en plusieurs couches, un revêtement de finition résistant à l'abrasion (2) étant appliqué sur une couche de base (1) servant en tant qu'agent adhésif.

9. Machine électrique selon la revendication 8, **caractérisée en ce que** la connexion électriquement conductrice (4) est élastique.

10. Machine électrique selon la revendication 9, **caractérisée en ce que** la connexion (4) est faite par un élastomère électriquement conducteur.

11. Machine électrique selon la revendication 10, **caractérisée en ce que** l'élastomère électriquement conducteur est une silicone électriquement conductrice, qui réticule à température ambiante.

12. Machine électrique selon l'une des revendications 10 ou 11, **caractérisée en ce que** la zone entre le conducteur (5) et un composant (7) de la machine électrique dans la zone du revêtement (1, 2) est remplie d'un élastomère au moins partiellement.

13. Machine électrique selon l'une des revendications 8 à 12, **caractérisée en ce que** la connexion électriquement conductrice (4) est disposée dans la zone d'extrémité des rainures.

14. Machine électrique selon l'une des revendications 8 à 13, ayant un enroulement haute tension équipé d'un dispositif anti-effluves aux extrémités (12), **caractérisée en ce que** le revêtement (1, 2) s'étend de la fixation (9) de l'enroulement haute tension au commencement du dispositif anti-effluves aux extrémités (12) et est connecté au dispositif anti-effluves aux extrémités (12) de façon électriquement conductrice via un bonding (3).
